**Europäisches Patentamt**

**European Patent Office**

**Office européen des brevets**

(19)

(11) Veröffentlichungsnummer : **0 374 374 B1**

(12)    **EUROPÄISCHE PATENTSCHRIFT**

(45) Veröffentlichungstag der Patentschrift :
28.12.94 Patentblatt 94/52

(51) Int. Cl.⁵ : **H04B 1/66,** H03C 3/06

(21) Anmeldenummer : **89116517.7**

(22) Anmeldetag : **07.09.89**

(54) **Verfahren und Vorrichtung zur Reduzierung der Nutzbandbreite eines bandbegrenzten Signals durch Kodieren desselben und Verfahren und Vorrichtung zum Dekodieren des bandbegrenzten Signals.**

(30) Priorität : **20.12.88 DE 3842831**

(43) Veröffentlichungstag der Anmeldung :
**27.06.90 Patentblatt 90/26**

(45) Bekanntmachung des Hinweises auf die
Patenterteilung :
**28.12.94 Patentblatt 94/52**

(84) Benannte Vertragsstaaten :
**AT BE CH DE ES FR GB GR IT LI LU NL SE**

(56) Entgegenhaltungen :
**ELECTRONIC DESIGN. Bd. 32, Nr. 5, März
1983,HASBROUCK HEIGHTS, NEW JERSEY
Seite 80; BIANCOMANO : 'Low i-f FM detector
cleansup distortion, simplifies circuitry'
Philips Technical Review, Vol. 41, 1983/84, Nr.
6, Seiten 169-82
Festschrift zum 300-jährigen Bestehen der Gesellschaft, Mitt. Math. Ges. Hamburg 12, Heft 3,
(1991), 523-547 (bzw. 1-25).**

(73) Patentinhaber : **ROBERT BOSCH GMBH
Postfach 30 02 20
D-70442 Stuttgart (DE)**

(72) Erfinder : **Ciulin, Dan
Chemin des Daillettes 5
CH-1012 Pully (CH)**

EP 0 374 374 B1

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

Jouve, 18, rue Saint-Denis, 75001 PARIS

## Beschreibung

Die Erfindung betrifft ein Verfahren und eine Vorrichtung zur Reduzierung der Nutzbandbreite eines bandbegrenzten Signals durch Kodieren desselben und ein Verfahren und eine Vorrichtung zum Dekodieren des kodierten bandbegrenzten Signals.

Es gibt eine Vielzahl von Verfahren, ein bandbegrenztes Signal zu kodieren, um seine Bandbreite zu komprimieren und entsprechend das kodierte Signal zu dekodieren. Diese Verfahren basieren auf verschiedenen Techniken, wie LPC (Linear Predicting Code), Teilbandkodierung usw. So ist es beispielsweise aus der Philips Technical Review, Vol. 41, 1983/84, Nr. 6, Seite 169 bis 182 bekannt, bei FM-Rundfunkempfängern eine Bandbreitenreduzierung dadurch vorzunehmen, in dem eine Frequenzrückführung vorgenommen wird. So wird das demodulierte Audiosignal dazu verwendet, die Frequenz des lokalen Oszillators eines Superhets zu verändern, so daß die Oszillatorfrequenz etwas mit der Frequenzabweichung des Senders mitläuft. Dadurch wird die Frequenzabweichung reduziert. Diese bekannten Verfahren sind aber nur bei einigen bestimmten Signalarten, beispielsweise Sprache anwendbar, bei der Reduktionsfaktoren von 2 bis 4 ohne Verlust der Signalqualität möglich sind.

In der Druckschrift Electronic Design vom 8. März 1984 ist im näheren Detail der in der Philips Technical Review erwähnte integrierte Schaltkreis beschrieben, soweit es die Bandbreitenreduzierung betrifft. Aus dieser Druckschrift ist es bekannt, das Audiosignal nach dem FM-Demodulator über einen Schleifenfilter zum VCO zurückzuführen, dessen Ausgangssignal wiederum in einem Mischer mit dem FM-Signal gemischt wird. Dadurch wird eine Reduktion der Nutzbandbreite des FM-Signals erreicht.

Ausgehend von diesem Stand der Technik liegt der Erfindung die Aufgabe zugrunde, ein Verfahren und eine Vorrichtung zur Reduzierung der Nutzbandbreite eines bandbegrenzten Signals durch Kodierung desselben und entsprechend ein Verfahren und eine Vorrichtung zum Dekodieren des kodierten Signals zu schaffen, mit dem jede Art von Signal ohne Qualitätsverlust mit großem Reduktionsfaktor verarbeitet werden kann, auch wenn die momentane Frequenz negativ ist.

Diese Aufgabe wird erfindungsgemäß bei einem Verfahren und einer Vorrichtung zur Reduzierung der Nutzbandbreite eines bandbegrenzten Signals durch die kennzeichnenden Merkmale des Anspruchs 1 und des Anspruchs 3 und bei einem Verfahren und einer Vorrichtung zum Dekodierung eines kodierten Signals durch die kennzeichnenden Merkmale des Anspruchs 5 und des Anspruchs 8 gelöst.

Die mit der Erfindung erzielbaren Vorteile bestehen insbesondere darin, daß die Nutzbandbreite jedes beliebigen bandbegrenzten Signals unter Beibehaltung der vollständigen Information mit einem Kompressionsfaktor, der von den Systemparametern abhängt, reduziert werden kann, wobei auch sogenannte "negative Frequenzen" auftreten können, ohne daß dies zu unakzeptablen Störungen der Signalübertragung führt. Als weiterer Vorteil ist anzusehen, daß das kodierte Signal eine eindeutige Umkehrung besitzt, d.h. eindeutig dekodiert werden kann. Dank der Komprimierung des Signals kann das Signal-Rauschverhältnis einer Übertragung in einem Kanal mit einer gleichmäßigen Rausch-Dichteverteilung verbessert werden. Weiterhin wird die Bandbreitendekompression ohne Veränderung des Zeitbereichs des komprimierten oder dekomprimierten Signals durchgeführt.

In der Beschreibung wird an verschiedenen Stellen der Ausdruck sinc verwendet. Hierbei handelt es sich zwar nicht um einen genormten Ausdruck, in der Mathematik ist dieser Ausdruck jedoch hinreichend bekannt, wie dies beispielsweise auch der Festschrift zum 300-jährigen Bestehen der Gesellschaft Mitt.Math.Ges.Hamburg 12, Heft 3, 1991, 523 bis 547 zu entnehmen ist.

Ausführungsbeispiele der Erfindung sind in der Zeichnung dargestellt und werden in der nachfolgenden Beschreibung näher erläutert. Es zeigen:

Fig. 1    ein Blockschaltbild einer Schaltung zur Reduzierung der Nutzbandbreite,

Fig. 2    die schaltungsgemäße Ausgestaltung eines Ausführungsbeispiels eines symmetrischen Spannungs-Frequenzwandlers,

Fig. 3    die Darstellung von Spannungssignalen an unterschiedlichen Stellen des Spannungs-Frequenzwandlers nach Fig. 2,

Fig. 4    die schaltungsgemäße Ausgestaltung eines Ausführungsbeispiels eines Frequenz-Spannungswandlers,

Fig. 5    die schaltungsgemäße Ausgestaltung einer Vorrichtung zum Dekodieren eines gemäß Fig. 1 kodierten bandbegrenzten Signals,

Fig. 6    die Signale (A) am Taktgeber, an den Ausgängen der Synchronisiereinheit (B) und an den Ausgängen der Tiefpässe (C),

Fig. 7    eine schaltungsgemäße Ausgestaltung der Invertierungsschaltung für eine 2 x 2 Matrix, und

Fig. 8    eine Darstellung der Fehler bei der Matrixinversion unter Verwendung von Zeit-Fenstern.

Ein frequenzmoduliertes Signal s(t) im Zeitbereich läßt sich durch die folgende Gleichung beschreiben, wobei die Randbedingung "Trägerfrequenz" gleich "Null" angenommen wird.

$$s(t) = U_o \cos [\int m \, q \, (t) \, dt + \Phi_o] \quad (1)$$

Dabei ist $U_o$ die Amplitude des Signals $s(t)$, m eine Konstante, die eine äquivalente Frequenzabweichung oder im klassischen Sinne den Modulationshub darstellt, $\phi_o$ eine konstante Anfangsphase und $q(t)$ das frequenzmodulierte Signal. Es ist bekannt, daß die notwendige Bandbreite zur Demodulation eines frequenzmodulierten Signals vom Wert von m abhängt und es ist möglich, die Bandbreite durch Frequenzmodulation mit Rückkopplung (FMFB) zu reduzieren.

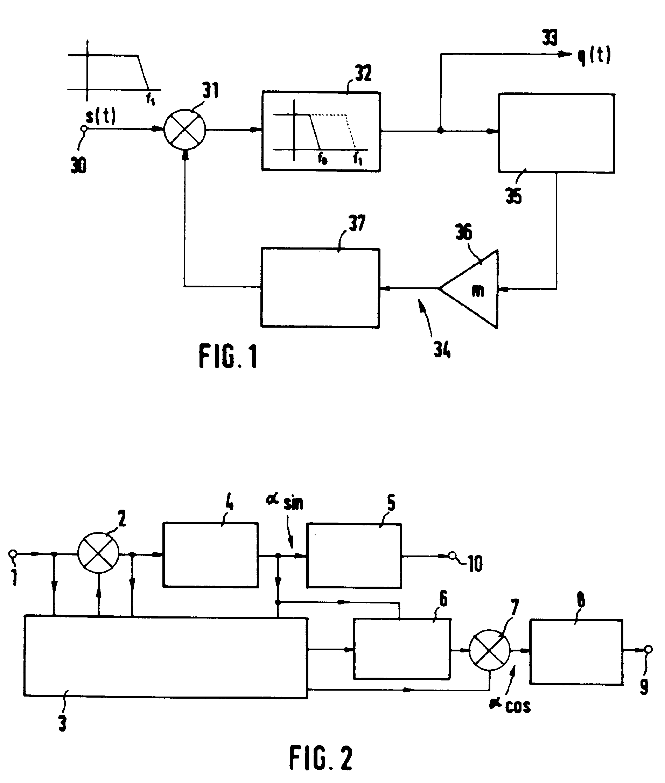

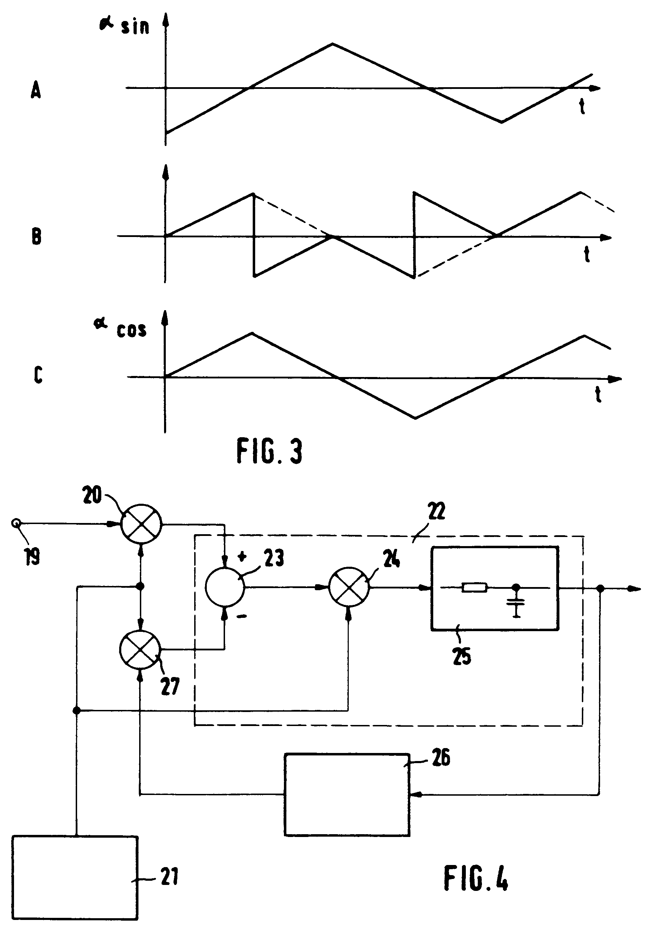

In Fig. 1 ist eine Schaltung zur Nutzbandreduzierung dargestellt, deren Eingang 30 mit einem Multiplizierer 31 verbunden ist. Der Ausgang des Multiplizierers 31 ist an einen Tiefpaß 32 angeschlossen, dessen Ausgang den Ausgang 33 der Schaltung bildet. In einer Rückkopplungsschleife 34 liegt ein symmetrischer Frequenzspannungswandler 35 gemäß Fig. 4, ein Verstärker 36 mit dem Verstärkungsfaktor m und ein Spannungs-Frequenzwandler 37 gemäß Fig. 2, dessen Ausgang an einen zweiten Eingang des Multiplizierers 31 angeschlossen ist. Diese Schaltung weist eine Regelkreisstruktur auf und ist ähnlich einem üblichen FMFB-Schaltkreis aufgebaut, berücksichtigt aber, daß die Trägerfrequenz als gleich Null angenommen wird. Die Schaltung verwendet daher den Tiefpaß 32 und, um streng lineare Frequenz-Spannungs-Beziehungen bzw. Spannungs-Frequenz-Beziehungen zu erzielen, müssen symmetrische Spannungs-Frequenz-Wandler 37 bzw. Frequenz-Spannungs-Wandler 35 verwendet werden.

Bei der Frequenzmodulation ist es sehr wichtig, die Phaseninformation beizubehalten, da die momentane Frequenz $f_i(t)$ die Ableitung der momentanen Phase $\varphi_i(t)$ ist. Die bekannten FMFB-Schaltkreise arbeiten mit "nicht Null" Trägersignalen und Bandpaßfiltern, wobei angenommen wird, daß die momentane Frequenz immer größer als Null ist. Wenn aber die momentane Frequenz negativ ist, springt die Phase um 180° und dies kann nicht mit den üblichen FMFB-Schaltkreisen realisiert werden. Außerdem können keine Fälle mit einem großen Verhältnis der momentanen Frequenz zur Trägerfrequenz gehandhabt werden. Die Schaltung nach Fig. 1 arbeitet mit einem "Null-Träger" und daher kann die momentane Frequenz auch negativ sein und das Momentanfrequenz- zum Trägerfrequenzverhältnis geht gegen unendlich.

Bevor weiter auf die Schaltung nach Fig. 1 eingegangen wird, soll die Ausbildung des für die vorliegende Erfindung notwendigen symmetrischen Spannungs-Frequenz- bzw. Frequenz-Spannungs-Wandlers näher erläutert werden.

Das Ausgangssignal $U_f$ eines symmetrischen Spannungs-Frequenzwandlers kann durch die folgende Gleichung dargestellt werden:

$$U_{f \text{ "cosine"}} = U_{fc} = U_o \cos [\int \beta U_i(t) \, dt + \phi] = U_o \cos (\alpha)$$

wobei $U_o$ die Ausgangsamplitude, $U_i(t)$ das Eingangssignal, $\phi$ eine durch den Konverter vorgegebene konstante Phase, $\beta$ ein Faktor und t die Zeit sind.

Ein Spannungs-Frequenzwandler mit einem derartigen Ausgangssignal ist in Fig. 2 dargestellt. Danach ist der Eingang 1 mit einem Multiplizierer 2 und einem logischen Schaltkreis 3 verbunden. Der logische Schaltkreis besteht vorzugsweise aus mehreren Komparatoren und einem digitalen Netzwerk, bestehend aus UND-Gattern, ODER-Gattern, einem X ODER-Gatter und einem Flip-Flop. Ein Ausgang des logischen Schaltkreises 3 ist an einen weiteren Eingang des Multiplizierers 2 angeschlossen. Der Ausgang des Multiplizierers steht mit dem Eingang eines Integrierers 4 in Verbindung, dessen Ausgang an einen Sinuswandler 5 den logischen Schaltkreis 3 und einen Addierer 6 angeschlossen ist. An einen weiteren Eingang des Addierers 6 liegt ein Ausgang des logischen Schaltkreises 3. Der Ausgang des Addierers 6 ist mit einem zweiten Multiplizierer 7 verbunden, an dessen zweiten Eingang ein weiterer Ausgang des logischen Schaltkreises liegt. An den Ausgang des zweiten Multiplizierers 7 ist ein weiterer Sinuswandler 8 angeschlossen.

Das am Eingang 1 anliegende Eingangssignal $U_i(t)$ kann eine beliebige Wellenform aufweisen. Zum klaren Verständnis wird im folgenden unter Bezugnahme auf Fig. 3 die Funktion anhand eines Gleichspannungseingangssignals erläutert. Das Eingangssignal $U_i(t)$ wird im Integrator 4 integriert, wobei sich ein linear ansteigendes Signal ergibt. Der Integrator ist so ausgelegt, daß seine Ausgangsspannung auf eine vorgegebene Amplitude begrenzt wird. Wenn diese Ausgangsspannung infolge des Spannungsverlaufs des Eingangssignals diese erreicht, wird das Vorzeichen des Signals am Eingang des Integrators 4 umgeschaltet.

Dies erfolgt über den ersten Multiplizierer 2, der das Eingangssignal mit + oder - 1 multipliziert, und zwar abhängig von einem vom logischen Schaltkreis 3 gelieferten Steuersignal.

Wenn das Eingangssignal $U_i(t)$ ein Gleichspannungssignal ist, wird am Ausgang des Integrators 4 ein dreieckförmiges Signal nach Fig. 3a geliefert, wobei jeweils der erste Multiplizierer 2 mit + oder - multipliziert, und die Vorzeichenumkehr jeweils am Minimum bzw. Maximum des dreieckförmigen Signals nach Fig.3c erfolgt. Das dreieckförmige Signal gelangt auf den zweiten Sinuswandler 5, in dem es in ein Sinussignal umgewandelt wird, wobei das Signal zuerst in einem Verstärker verschoben wird und die positive Spitze des dreieckförmigen Signals in einer nichtlinearen Differentialstufe zu einer Sinusform gerundet wird. Das Signal gelangt dann weiter über eine Pufferstufe und einen Spannungsteiler auf einen weiteren Verstärker zur Verschiebung des Si-

3

gnals und gelangt auf eine weitere nichtlineare Differentialstufe, in der die negative Spitze des dreieckförmigen Signals in eine Sinusform gerundet wird. Über eine weitere Pufferstufe und einen Spannungsteiler gelangt das so geformte Signal zu einem Ausgangsverstärker, der ein echtes Sinussignal

$$U_{f\,sin} = U_o \cdot \sin [\int \beta \, U_i(t) \, dt + \phi]$$

liefert. Die beschriebene Anordnung des Sinuswandlers 5 wird nur beispielhaft angegeben, selbstverständlich können auch anders ausgebildete Sinuswandler verwendet werden. Um ein echtes Kosinussignal am Ausgang des ersten Sinuswandlers 8 zu erzielen, muß das am Ausgang des Integrators 4 liegende dreieckförmige Signal $\alpha$ sin modifiziert werden, um ein neues dreieckförmiges Signal $\alpha$ cos zu bilden, das nach Bearbeitung durch den ersten Sinuswandler 8 das durch die obige Gleichung angegebene echte Kosinussignal liefert. Zur Modifizierung des dreieckförmigen Signals $\alpha$ sin dienen der Addierer 6 und der Multiplizierer 7. Gemäß Fig. 3 wird dem dreieckförmigen Signal $\alpha$sin ein Offsetwert in dem Addierer 6 hinzugefügt, wobei die Addition vom Vorzeichen des Signals $\alpha$ sin abhängt, d.h. der Offsetwert wird immer dann in seinem Vorzeichen geändert, wenn das Signal $\alpha$ sin durch Null geht. Es entsteht somit das Signal nach Fig. 3b in den durchgezogenen Linien, das am Ausgang des Addierers 6 anliegt. In dem durch die gestrichelten Linien angedeuteten Bereich wird durch Multiplikation im Multiplizierer 7 um $\pm$ 1 die Steigung, so daß sich am Ausgang des Multiplizierers 7 das Signal $\alpha$cos nach Fig. 3c ergibt. Die Ansteuerung des Addierers 6 und des Multiplizierers 7 erfolgt abhängig von vom logischen Schaltkreis 3 gelieferten Steuersignalen, die wiederum abhängig vom Eingangssignal und vom Ausgangssignal des Integrierers 4 erzeugt werden. Der erste Sinuswandler 8 transformiert das dreieckförmige Signal $\alpha$ cos am Ausgang des Multiplizierers 7 in ein kosinusförmiges Signal entsprechend der oben angegebenen Formel.

Mit der Schaltung nach Fig. 1 ist es möglich, den Frequenzbereich eines Spannungs-Frequenzwandlers um den Faktor 2 zu erweitern. Um eine Erweiterung um den Faktor $2^N$ zu erzielen, können mehrere Stufen hintereinandergeschaltet werden, wobei allerdings die Ausgangsspannung nach jeder Stufe auf einen geeigneten Wert gedämpft werden muß, damit nicht der Amplitudenbereich überschritten wird.

Mit Hilfe des Spannungs-Frequenzwandlers nach Fig. 2 läßt sich nach Fig. 4 ein Frequenz-Spannungswandler herstellen, der eine symmetrische Frequenz-Spannungskennlinie aufweist. Der Frequenz-Spannungswandler nach Fig. 4 weist einen ersten Mischer 20 auf, dessen Eingänge einerseits mit der Eingangsklemme 19 und andererseits mit einem Referenzoszillator 21, der eine Referenzfrequenz $f_r$ liefert, verbunden ist. Der Ausgang des Mischers liegt an einem Synchrondetektor 22 an, der die Reihenschaltung aus einem Differenzbildner 23, einem zweiten Mischer 24 und einem Tiefpaß 25 aufweist. Der zweite Mischer 24 ist ebenfalls mit dem Referenzoszillator 21 verbunden. In einer Rückschleife ist ein Spannungs-Frequenzwandler nach Fig. 2 an den Ausgang des Synchrondetektors 22 geschaltet, wobei der Ausgang des Spannungs-Frequenzwandlers 26 mit einem dritten Mischer 27 verbunden ist, an dessen anderem Ende der Referenzoszillator 21 liegt. Der Ausgang des dritten Mischers 27 steht mit dem zweiten Eingang des Differenzbildners 23 in Verbindung.

Die Funktionsweise des in Fig. 4 dargestellten Frequenz-Spannungswandlers ist wie folgt:

Das an der Klemme 19 anliegende Eingangssignal wird in dem ersten Mischer 20 mit der höheren Referenzfrequenz $f_r$, die in etwa mindestens fünf- bis zehnmal größer ist als die Maximalfrequenz des Eingangssignals, multipliziert, d.h. es wird nach höheren Frequenzen hin verschoben. Dies ist notwendig, um ein einwandfreies Arbeiten des Synchrondetektors 22 zu gewährleisten und die Zeitkonstante der als phasenempfindlicher Regelkreis ausgebildeten Schaltung klein zu halten. Dadurch hat der Tiefpaß 25 eine Zeitkonstante von drei bis fünf Perioden des Referenzoszillators 21 und nicht des Eingangssignals. Wenn die Referenzfrequenz $f_r$ groß genug gewählt wird, so kann das Eingangssignal in so viele Zeitintervalle eingeteilt werden, wie in Betracht gezogen werden können, so daß die Steuerung in "Phase" realisiert werden kann. Über den Differenzbildner 23 wird die "Phase" des Eingangssignals mit der "Phase" des mittels des Spannungs-Frequenzwandlers 26 rekonstruierten Signals verglichen und die resultierende "Phase" wird von dem analogen "Phasendetektor", der vom zweiten Mischer 24 und vom Tiefpaß 25 gebildet wird, in eine Spannung umgesetzt. Dieser"Phasendetektor" vergleicht die Phase des Referenzoszillators 21 mit der Phase des Ausgangssignals des als Operationsverstärkers ausgebildeten Differenzbildners 28.

Diese Anordnung rekonstruiert jedes Signal, wenn ihre maximale Momentanfrequenz mindestens geringer als $f_r$ (5 bis 10), um die Bedingung der"Phase" zu erfüllen, und wenn ihre Amplitude nicht die maximale Amplitude am Spannungs-Frequenzwandler 26 übersteigt.

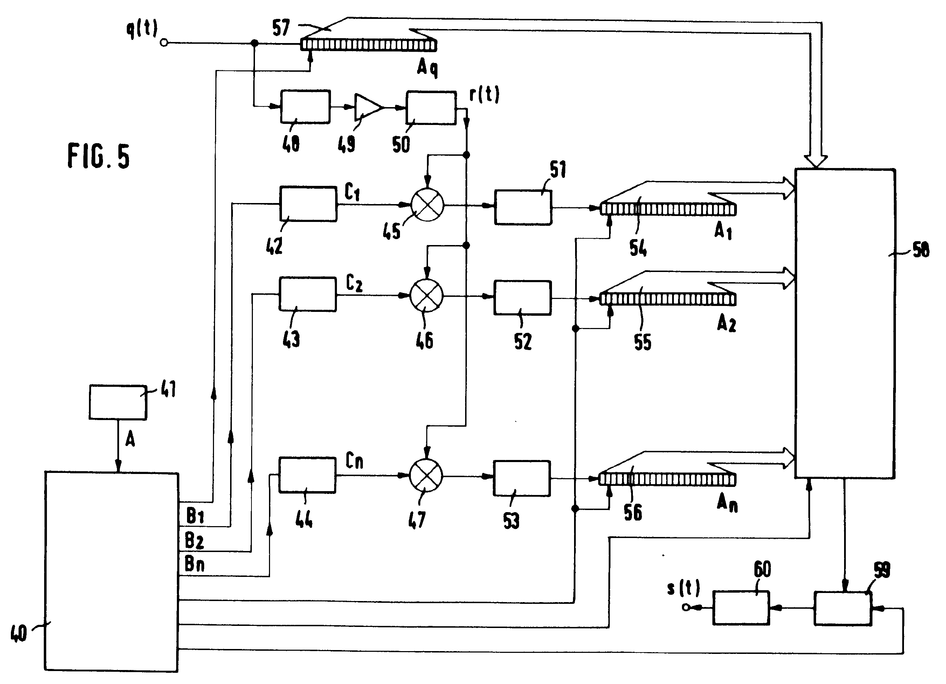

Wegen der Symmetrie liegt am Ausgang des Spannungs-Frequenzwandlers 26 das gleiche Signal an wie am Eingang 19, wenn das Eingangssignal nicht den Bereich der Systemparameter übersteigt. Für diesen Fall kann die Schaltung nach Fig. 5 als wirklich symmetrischer Frequenz-Spannungswandler betrachtet werden.

Aufgrund der oben beschriebenen Eigenschaften kann der symmetrische Spannungs-Frequenzwandler gemäß der Erfindung als wirklicher Phasen/Frequenzmodulator und der symmetrische Frequenz-Spannungswandler als wirklicher Phasen-Frequenzdemodulator verwendet werden.

Im folgenden wird wieder auf die Fig. 1 Bezug genommen. Das Signal q(t) wird in dem Frequenz-Spannungswandler 35 demoduliert, dann von dem Verstärker 36 mit dem Verstärkungsfaktor m verstärkt, um die gewünschte Frequenzabweichung bzw. den gewünschten Modulationshub zu bekommen. Das verstärkte Signal wird anschließend im Spannungs-Frequenzwandler 37 frequenzmoduliert und auf den Eingang des Multiplizierer 31 gegeben. Dabei muß m groß genug sein, damit die Bandbreite des frequenzmodulierten Signals an dem Eingang des Multiplizierers 31 größer ist als die Bandbreite des Eingangssignals s(t) an dem anderen Eingang. Das vom Spannungsfrequenzwandler 37 frequenzmodulierte Signal wird im Multiplizierer 31 mit dem Eingangssignal s(t) multipliziert und das Ergebnis anschließend im Tiefpaß 32 gefiltert, wodurch das Ausgangssignal q(t) geliefert wird. Wegen des Tiefpasses 32 kann q(t) keine größere Bandbreite haben als die Bandbreite des Tiefpasses 32, so daß der Bandbreiten-Kompressionsfaktor durch

$$K = \frac{\text{Bandbreite des Eingangssignals } s(t)}{\text{Bandbreite des Ausgangssignals } q(t)} = \frac{f_1}{f_o}.$$

Wenn der Tiefpaß 32 ein idealer Tiefpaß ist, ist der in Fig. 1 dargestellte Regelkreis äquivalent zur Gleichung

$$q(t) = \int_0^t s(\tau) \cos[m_1 q(\tau)] \frac{\sin \omega_0 (t - \tau - \tau_0)}{\omega_0 (t - \tau - \tau_0)} d\tau \quad (2),$$

wobei

$f_o = \omega_0/2\pi$ = die Grenzfrequenz des Tiefpasses 32 und
$\tau_0$ = die Verzögerung des Tiefpasses ist.

Die Gleichung ist eine Volterra-Hammerstein Integralgleichung. Da diese Gleichung eine einzige Lösung hat, kann dieses Kodierverfahren eindeutig dekodiert werden, um das Eingangssignal s(t) zurückzubekommen.

Die Signale s(t) und q(t) können als zwei durch die Gleichung (1) gegebenen Signale angesehen werden, bei der nur der Parameter "m" geändert ist. Deswegen kann dieses Kodierverfahren als ein "Redundanz-Reduktionsverfahren" angesehen werden. Das kodierte Signal q(t) kann als ein "verwürfeltes Signal" angesehen werden, das scheinbar jede Verbindung mit dem Eingangssignal s(t) verloren hat.

Im folgenden soll die Dekodierung eines in der Bandbreite komprimierten und kodierten Signales, das durch die Gleichung (2) beschrieben wird, erläutert werden. Bei der Dekodierung ist das Signal q(t) bekannt, aber nicht das Eingangssignal s(t) und es kann ersetzt werden

$$r(t) = \cos(mq(t)).$$

Unter Berücksichtigung der Gleichung (2) kann geschrieben werden

$$q(t) = \int_0^t s(\tau) r(\tau) \frac{\sin \omega_0 (t - \tau - \tau_0)}{\omega_0 (t - \tau - \tau_0)} d\tau \quad (2')$$

Da s(t) ein bandbegrenztes Signal ist, kann es wie folgt dargestellt werden

$$s(t) = \sum_K s(K/2f_1) \frac{\sin[4\pi f_1 (t - K/2f_1)]}{4\pi f_1 (t - K/2f_1)} W(t) \quad (3)$$

wobei W(t) eine Fensterfunktion (z.B. Hamming) ist.
Die Gleichung 3 kann ersetzt werden durch

$$s(t) = \sum_K s(K/2f_1) \, \text{sinc}\left[4\pi f_1 (t - K/2f_1)\right] W(t) \quad (3').$$

Das unbekannte dekodierte Signal s(t) wird somit als Abtastreihe dargestellt. Unter Verwendung der Gleichungen 2′ und 3′ ergibt sich

$$q(t) = \sum_K s(K/2f_1) \int_0^t sinc\left[4\pi f_1(\tau-K/2f_1)\right] W(\tau)\, r(\tau) sinc\left[\omega_o(t-\tau-\tau_o)\right]\, d\tau$$

$$= \sum_K s(K/2f_1)\, m\,(t,K) \tag{4}.$$

Unter Berücksichtigung der Faltung ergibt sich m(t,K) zu

$$m(t,K) = sinc\,[4\,\pi\,f_1(t - K/2f_1)]\, W(t)\, r(t) * sinc[\omega_o(t - \tau_o)] \tag{5}.$$

Die Gleichung (4) bildet für gegebene diskrete Werte von t zwischen K und K+1 ein lineares System, durch das das dekodierte Signal s(t) rekonstruiert werden kann.

Eine Schaltung zum Dekodieren des kodierten Signals q(t) ist in Fig. 5 gezeigt.

Die Signale sinc $[4\,\pi\,f_1(t-K/2f_1)]$ werden analog unter Verwendung von Dirac-Impulsen hergestellt, die tiefpaßgefiltert werden. Eine Synchronisiereinheit 40 mit Taktgeber 41 liefert an die Eingänge eines Satzes von n-Tiefpässen 42,43,44 mit einer Grenzfrequenz von $2f_1$ die Impulse mit einer gleichmäßigen Spektraldichte in der Bandbreite $0$-$2f_1$. Wenn eine genügend hohe Taktfrequenz vorhanden ist, können Impulse mit einem Tastverhältnis 1 zu 1000 geliefert werden, die nach Bearbeitung durch die Tiefpässe 42,43,44 eine genügend gute Näherung der Funktion sinc [·] ergeben.

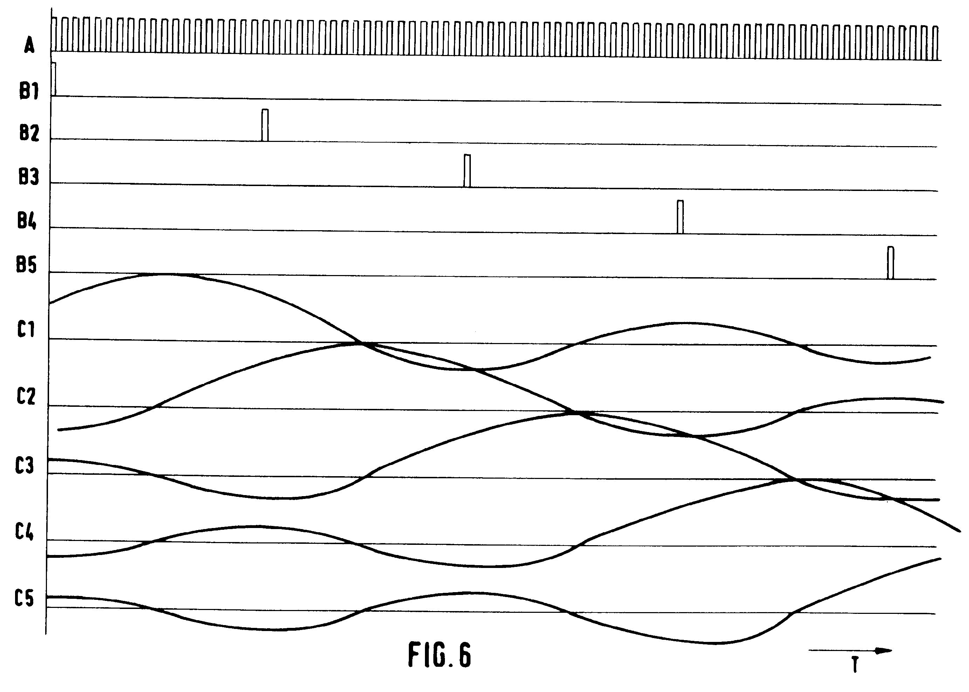

An dem Ausgang des Taktgebers 41, den Eingängen und den Ausgängen der Tiefpässe 42 bis 44 liegen die in der Fig. 6 dargestellten Signale an.

Um die Signale m(t,K) nach Gleichung 5 in analoger Weise zu erhalten, müssen sinc [·] -Impulse am Ausgang der Tiefpässe 42 bis 44 mit dem Signal r(t) multipliziert werden und dann bei der Grenzfrequenz $f_o$ tiefpaßgefiltert werden. Dazu ist ein Satz von n-Multiplizierern 45, 46, 47 vorgesehen, auf deren Eingänge die Ausgangssignale der Tiefpässe 42 bis 44 und das Signal r(t) geführt werden, wobei das Signal r(t) von einem mit dem Eingang der Dekoderschaltung verbundenen symmetrischen Frequenz-Spannungswandler 48, einem Verstärker 49 mit dem Verstärkungsfaktor m und einem symmetrischen Spannungs-Frequenzwandler 50 erzeugt wird. Die zuletzt beschriebene Anordnung entspricht der Rückkopplungsschleife der Kodierschaltung. Die Signale an den Ausgängen der Multiplizierer werden in den Tiefpaßfiltern 51,52,53 mit Grenzfrequenz $f_o$ bearbeitet.

Die tiefpaßgefilterten Signale werden in einen Satz von Verzögerungsleitungen 54,55,56, bestehend aus CCD-Elementen (Ladungsverschiebungselementen) mit Anzapfungen gegeben, in denen sie für n + 1 Stufen während eines Zeitintervalls entsprechend K gespeichert werden. An den Ausgängen der Verzögerungsleitungen 54 bis 56 werden somit Abtastsignale der Funktion m(t,K) nach Gleichung (5) erhalten, während am Ausgang einer entsprechenden CCD-Verzögerungsleitung 57 Abtastsignale des kodierten Signals q(t) liegen.

Die Synchronisiereinheit 40 stellt die notwendige Synchronisierung der Verzögerungsleitungen 54 bis 57 sicher. Alle die gespeicherten Werte bzw. Signale werden dem Block 58 "Lineare System-Inversion und nichtlineare Rückkopplung" zugeführt, der aus Multiplizierern und Addierern, Schaltern, Vergleichern und Zwischenspeichern besteht, und der durch Verarbeiten der der Gleichung (4) entsprechenden Signale gemäß einer Matrixinversion Abtastwerte des dekodierten Signals s(t) liefert.

Beim Abtasten der Zeit ergibt sich mathematisch gesehen folgendes:

$$q\,(t_1) = \sum_K s(K/2f_1)\, m\,(t_1,K)$$

$$q\,(t_2) = \sum_K s(K/2f_1)\, m\,(t_2,K)$$

$$q\,(t_i) = \sum_K s(K/2f_1)\, m\,(t_i,K).$$

Dies entspricht der Matrixgleichung

$$\|q\,(t_i)\| = \|m\,(t_i,K)\| \cdot \|s(K/2f_1)\|,$$

die unter bestimmten Bedingungen gelöst werden kann zu

$$\|s(K/2f_1)\| = \|m\,(t_i,K\|^{-1} \cdot \|q\,(t_i)\|.$$

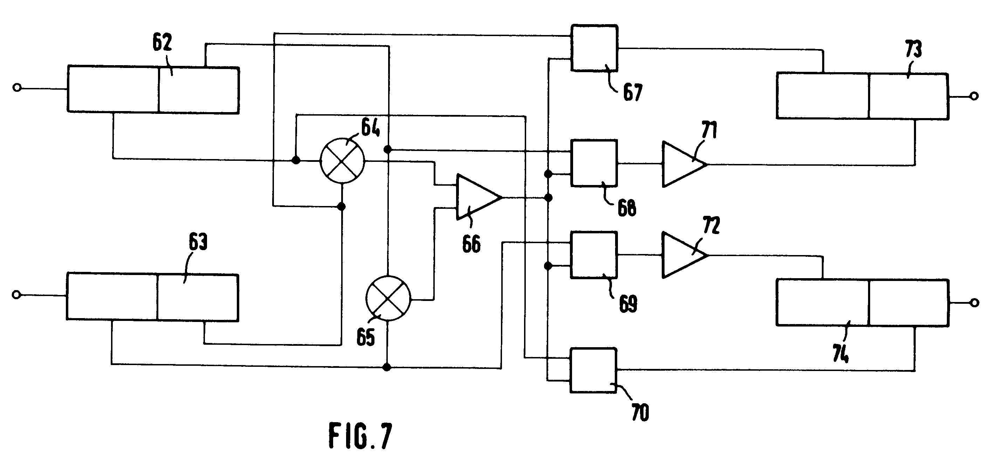

Eine Schaltung für eine Matrixinversion, die in dem Block 58 enthalten ist, wird in Fig. 7 gezeigt, wobei sie auf eine 2 x 2 Matrix beschränkt ist. Die Matrix $\|m\|$ sei

$$\| m \| = \left\| \begin{array}{cc} a_{11} & a_{12} \\ a_{21} & a_{22} \end{array} \right\| .$$

Die Zeilen der Matrix m (t,K)werden jeweils in den Elementen der Verzögerungsleitungen 54 bis 56 gespeichert. Im Falle der Matrix m sind gemäß Fig. 7 die zwei Zeilen in den Verzögerungsleitungen 62, 63 gespeichert.

Wenn

$$D = \det \| m \| = a_{11} a_{22} - a_{12} a_{21} \neq 0$$

dann ist

$$\| m \|^{-1} = \left\| \begin{array}{cc} a_{22} & -a_{12} \\ -a_{21} & a_{11} \end{array} \right\| \cdot \frac{1}{D}$$

da

$$\| m \| \cdot \| m \|^{-1} = \frac{1}{D} \left\| \begin{array}{cc} a_{11} & a_{12} \\ a_{21} & a_{22} \end{array} \right\| \cdot \left\| \begin{array}{cc} a_{22} & -a_{12} \\ -a_{21} & a_{11} \end{array} \right\| = \frac{1}{D} \left\| \begin{array}{cc} D & 0 \\ 0 & D \end{array} \right\| = \left\| \begin{array}{cc} 1 & 0 \\ 0 & 1 \end{array} \right\| =$$

$$= \| I \| \text{ als Einheitsmatrix.}$$

In Fig. 7 werden die Elemente $a_{11}$ und $a_{22}$ im Multiplizierer 64 und $a_{21}$ und $a_{12}$ im Multiplizierer 65 multipliziert und in dem Subtrahierer 66 wird die Differenz gebildet, die auf die einen Eingänge von vier Dividierern 67 bis 70 gegeben werden.

An den anderen Eingängen liegen die Elemente $a_{11}$, $a_{12}$, $a_{21}$ und $a_{22}$. Die Dividierer 68, 69 sind jeweils mit einem Invertierer 71, 72 verbunden, in denen die Vorzeichen gewechselt werden. In den Verzögerungsleitungen werden jeweils die Zeilen der invertierten Matrix zwischengespeichert.

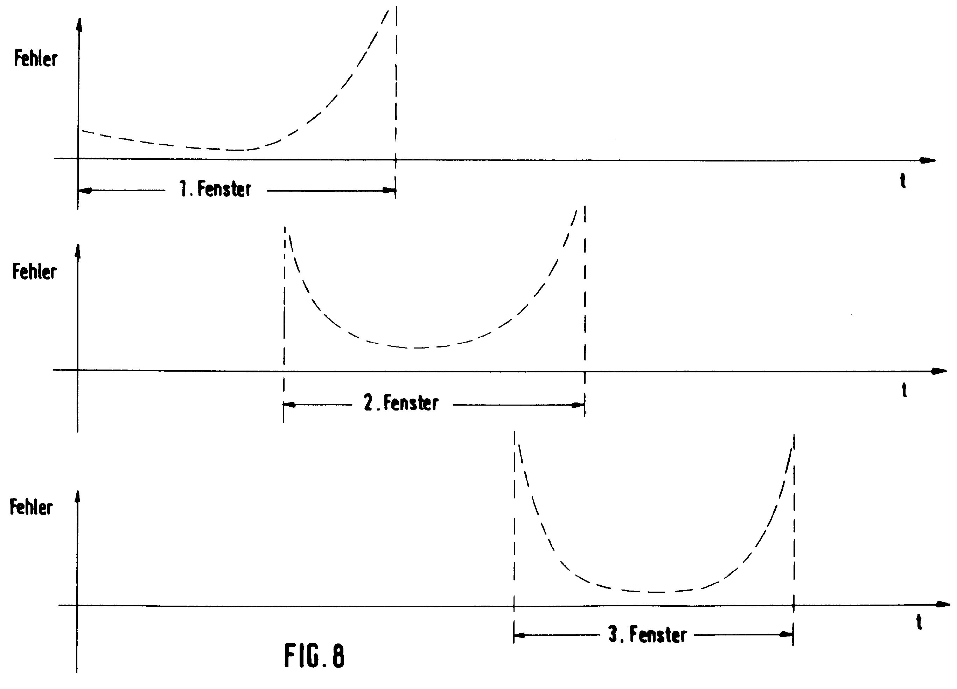

Für die Matrixinversion wird das "minimal norm inversion"-Verfahren verwendet, das in "Zeit-Fenstern" durchgeführt wird. Für jedes Zeitintervall bzw. "Zeit-Fenster", das einer Matrixinversion entspricht sind die Fehler an den Enden größer wie in Fig. 8 gezeigt ist. Um die Fehler gering zu halten, werden die Zeit-Fenster überlappt, wobei der Überlappungsgrad die Größe des Fehlers bestimmt. Dies geschieht durch eine Art Rückkopplung, die im Block 58 durchgeführt wird.

Am Ausgang des Blocks 58 werden die rekonstruierten Abtastwerte $\hat{s}(K/2f_1)$ des Signals s(t) erhalten. Um das analoge Signal $\hat{s}(t)$ zu bilden, werden die Abtastsignale in den Puffer 59 gegeben, aus dem sie seriell ausgelesen werden und in dem Tiefpaß 60 mit der Grenzfrequenz $f_1$ gefiltert. Die von der Synchronisiereinheit 40 vorgegebene Taktfrequenz stellt das richtige Timing sicher.

In einem anderen Ausführungsbeispiel kann die Matrixinversion berechnet werden und der Puffer 59 wird dann anschließend mit den numerischen Werten des rekonstruierten Signals gefüllt.

Wieviel n-Sätze der einzelnen Tiefpässe, Multiplizierer und Verzögerungsleitungen verwendet werden, hängt von der gewünschten Genauigkeit ab, wobei sie ein "Beobachtungszeitfenster" vorgeben. Ein typischer Wert ist n >> 25.

**Patentansprüche**

1. Verfahren zur Reduzierung der Bandbreite eines bandbegrenzten Signals, in dem das Eingangssignal mit dem Ausgangssignal eines Spannungsfrequenzwandlers (37) multipliziert, danach das multiplizierte Signal mit einem Tiefpaß (32) gefiltert , und dann das Signal in eine der Frequenz proportionale Spannung umgewandelt wird, verstärkt und dem Eingang des Spannungsfrequenzwandlers (37) zugeführt wird, dadurch gekennzeichnet, daß die Umwandlung des Signals in eine der Frequenz proportionale Spannung durch einen Wandler (35) erfolgt, der eine zum Nullpunkt der Frequenz symmetrische Kennlinie aufweist,

7

und die Umwandlung der Spannung in eine Frequenz durch einen Wandler (37) erfolgt, der eine zum Nullpunkt der Spannung symmetrische Kennlinie aufweist.

2. Verfahren nach Anspruch 1, dadurch gekennzeichnet, daß das frequenzspannungsgewandelte Signal so stark verstärkt wird, daß die Bandbreite des anschließend frequenzmodulierten Signals größer als die Bandbreite des Eingangssignals ist.

3. Vorrichtung zur Reduzierung der Bandbreite eines bandbegrenzten Signals, wobei das Eingangssignal und das Ausgangssignal eines Spannungsfrequenzwandlers (37) einem Multiplizierer (31) zugeführt ist und das Ausgangssignal des Multiplizierers (31) zu einem Filter (32) führt, dem Filter ein Frequenzspannungswandler(35) folgt, dessen Ausgang ein Schleifenfilter (25) und ein Verstärker(36) nachgeschaltet ist, und wobei das Ausgangssignal des Verstärkers (36) dem Spannungsfrequenzwandler (37) zugeführt ist, dadurch gekennzeichnet, daß der Frequenzspannungswandler (35) eine zum Nullpunkt der Frequenz symmetrische Kennlinie aufweist und der Spannungsfrequenzwandler (37) eine zum Nullpunkt der Spannung symmetrische Kennlinie aufweist.

4. Vorrichtung nach Anspruch 3, dadurch gekennzeichnet, daß der Verstärkungsfaktor des Verstärkers (36) so groß gewählt wird, daß die Bandbreite des Signals am Ausgang des symmetrischen Spannungs-Frequenzwandlers (37) größer als die Bandbreite des Eingangssignals ist.

5. Verfahren zur Dekodierung eines nach einem der Ansprüche 1 bis 4 kodierten Signals, dadurch gekennzeichnet, daß ein Satz von n Impulsen mit kleinem Tastverhältnis mit einer gleichmäßigen Spektraldichte erzeugt und zur Erzeugung von ersten Abtastsignalen, die der Formel

$$\sin [(4 \pi f_1) (t - K/2f_1)] / 4 \pi f_1 (t - K/2f_1)$$

entsprechen, mit einer Grenzfrequenz von $2f_1$ tiefpaßgefiltert werden, daß das kodierte bandbegrenzte Eingangssignal über einen symmetrischen Frequenz-Spannungswandler, einen Verstärker und einen symmetrischen Spannungs-Frequenzwandler geleitet und mit den ersten Abtastsignalen multipliziert wird, daß der Satz der resultierenden Signale mit einer Grenzfrequenz von $f_o$ tiefpaßgefiltert und in einem Satz von n Verzögerungsleitungen für vorgegebene Zeiten gespeichert wird und als Abtastsignale $m(t,K)$ anschließend einer Invertierungsschaltung zugeführt werden, die außerdem Abtastsignale des in einer Verzögerungsleitung gespeicherten kodierten bandbegrenzten Eingangssignals $q(t)$ empfängt und die die erhaltenen Signale gemäß der Gleichung

$$q(t) = \sum_K s(K/2f_1)m(t,K)$$

zur Erzeugung von Abtastsignalen $s(K/2f_1)$ des dekodierten Signals $s(t)$ unter Vornahme einer Matrixinversion verarbeitet, wobei n eine ganze Zahl, f1 die Bandbreite des Eingangssignals, t die Zeit und K der Bandbreitenkompressionsfaktor ist.

6. Verfahren nach Anspruch 5, dadurch gekennzeichnet, daß die Abtastsignale $s(K/2f_1)$ des dekodierten Signals $s(t)$ einem Puffer zugeführt, von dort seriell ausgelesen und mit einer Grenzfrequenz von $f_1$ tiefpaßgefiltert werden.

7. Verfahren nach Anspruch 5 oder 6, dadurch gekennzeichnet, daß die Impulse des Satzes von n Impulsen vorzugsweise ein Tastver-hältnis von 1/1000 aufweisen.

8. Vorrichtung zur Durchführung des Verfahrens nach einem der Ansprüche 5 bis 7, dadurch gekennzeichnet, daß eine Synchronisiereinheit (40) mit Taktgeber (41) zur Erzeugung des Satzes von n Impulsen mit kleinem Tastverhältnis vorgesehen ist, daß die Synchronisiereinheit (40) mit einem Satz von n Tiefpässen (42-44) mit einer Grenzfrequenz von $2f_1$ verbunden ist, die ihrerseits an die ersten Eingänge eines Satzes von n Multiplizierern (45-47) angeschlossen sind, daß der Eingang des kodierten Signals mit einem symmetrischen Frequenz-Spannungs-Wandler (48) verbunden ist, der über einen Verstärker (48) an einen symmetrischen Spannungs-Frequenz-Wandler (50) angeschlossen ist, dessen Ausgang mit den zweiten Eingängen der Multiplizierer (45-47) verbunden ist, daß die Ausgänge der Multiplizierer (45-47) jeweils auf einen Tiefpaß (51-53) mit der Grenzfrequenz $f_o$ führen und die n Tiefpässe (51-53) mit einem Satz von n Verzögerungsleitungen (54-56) verbunden sind, die von der Synchronisiereinheit (40) synchronisiert werden, daß der Eingang des kodierten Signals an eine weitere von der Synchronisiereinheit (40) synchronisierten Verzögerungsleitung (57) angeschlossen ist und daß alle Verzögerungsleitungen (54-57) mit einer Invertierungsschaltungsanordnung (58) verbunden sind, die von der Synchronisiereinheit (40) synchronisiert wird und eine Matrixinversion vornimmt.

9. Vorrichtung nach Anspruch 8, dadurch gekennzeichnet, daß die Invertierungsschaltungsanordnung (58) aus Multiplizierern und Addierern, Schaltern, Vergleichern und Zwischenspeichern besteht.

10. Vorrichtung nach Anspruch 8 oder 9, dadurch gekennzeichnet, daß der Ausgang der Invertierungsschaltungsanordnung (58) mit einem Puffer (59) verbunden ist, der von der Synchronisiereinheit (40) synchronisiert wird und daß der Puffer (59) an einen Tiefpaß (60) mit der Grenzfrequenz $f_1$ angeschlossen ist.

11. Vorrichtung nach einem der Ansprüche 8 bis 10, dadurch gekennzeichnet, daß n größer als 25 ist.

**Claims**

1. Method for reducing the bandwidth of a band-limited signal, in which the input signal is multiplied by the output signal from a voltage/frequency converter (37), the multiplied signal is then filtered using a low-pass filter (32) and the signal is then converted into a voltage proportional to the frequency, is amplified and is supplied to the input of the voltage/frequency converter (37), characterized in that the conversion of the signal into a voltage proportional to the frequency is carried out by a converter (35) which has a characteristic which is symmetrical with respect to the null point of the frequency, and the conversion of the voltage into a frequency is carried out by a converter (37) which has a characteristic which is symmetrical with respect to the null point of the voltage.

2. Method according to Claim 1, characterized in that the frequency/voltage-converted signal is amplified to such an extent that the bandwidth of the subsequently frequency-modulated signal is greater than the bandwidth of the input signal.

3. Device for reducing the bandwidth of a band-limited signal, the input signal and the output signal of a voltage/frequency converter (37) being supplied to a multiplier (31), and the output signal from the multiplier (31) passing to a filter (32), which filter is followed by a frequency/voltage converter (35), downstream of whose output a loop filter (25) and an amplifier (36) are connected, and the output signal from the amplifier (36) being supplied to the voltage/frequency converter (37), characterized in that the frequency/voltage converter (35) has a characteristic which is symmetrical with respect to the null point of the frequency, and the voltage/frequency converter (37) has a characteristic which is symmetrical with respect to the null point of the voltage.

4. Device according to Claim 3, characterized in that the gain factor of the amplifier (36) is selected to be so large that the bandwidth of the signal at the output from the symmetrical voltage/frequency converter (37) is greater than the bandwidth of the input signal.

5. Method for decoding a signal which is coded in accordance with one of Claims 1 to 4, characterized in that a set of n pulses is produced having a low duty ratio and having a uniform spectral density and, in order to produce first sampling signals which conform with the formula

$$\sin \left[ (4 \pi f_1)(t - K/2f_1) \right] / 4 \pi f_1 (t - K/2f_1),$$

are low-pass-filtered with a cut-off frequency of $2f_1$, in that the coded, band-limited input signal is passed via a symmetrical frequency/voltage converter, an amplifier and a symmetrical voltage/frequency converter and is multiplied by the first sample signals, in that the set of resulting signals is low-pass-filtered with a cut-off frequency of $f_0$ and is stored for predetermined times in a set of n delay lines and is subsequently supplied to an inverting circuit as sample signals m(t,K), which inverting circuit also receives sample signals from the coded, band-limited input signal q(t) stored in a delay line, and processes the received signals in accordance with the equation

$$q(t) = \sum_K s(K/2f_1) m(t,K)$$

in order to produce sample signals $s(K/2f_1)$ from the decoded signal s(t) with matrix inversion being carried

EP 0 374 374 B1

out, n being an integer, $f_1$ the bandwidth of the input signal, t the time and K the bandwidth compression factor.

6. Method according to Claim 5, characterized in that the sample signals $s(K/2f_1)$ from the decoded signal $s(t)$ are supplied to a buffer, are read out from there in serial form and are low-pass-filtered with a cut-off frequency of $f_1$.

7. Method according to Claim 5 or 6, characterized in that the pulses in the set of n pulses preferably have a duty ratio of 1/1,000.

8. Device for carrying out the method according to one of Claims 5 to 7, characterized in that a synchronization unit (40) is provided, having a clock transmitter (41) for producing the set of n pulses at a low duty ratio, in that the synchronization unit (40) is connected to a set of n low-pass filters (42-44) with a cut-off frequency of $2f_1$, which filters, for their part, are connected to the first inputs of a set of n multipliers (45-47), in that the input of the coded signal is connected to a symmetrical frequency/voltage converter (48) which is connected via an amplifier (48) to a symmetrical voltage/frequency converter (50) whose output is connected to the second inputs of the multipliers (45-47), in that the outputs from the multipliers (45-47) each pass to a low-pass filter (51-53) with the cut-off frequency $f_0$, and the n low-pass filters (51-53) are connected to a set of n delay lines (54-56) which are synchronized by the synchronization unit (40), in that the input of the coded signal is connected to a further delay line (57) which is synchronized by the synchronization unit (40), and in that all the delay lines (54-57) are connected to an inverting circuit arrangement (58), which is synchronized by the synchronization unit (40) and carries out matrix inversion.

9. Device according to Claim 8, characterized in that the inverting circuit arrangement (58) comprises multipliers and adders, switches, comparators and buffer stores.

10. Device according to Claim 8 or 9, characterized in that the output from the inverting circuit arrangement (58) is connected to a buffer (59) which is synchronized by the synchronization unit (40), and in that the buffer (59) is connected to a low-pass filter (60) with the cut-off frequency $f_1$.

11. Device according to one of Claims 8 to 10, characterized in that n is greater than 25.


**Revendications**

1. Procédé pour réduire la largeur de bande d'un signal à largeur de bande limitée, selon lequel le signal d'entrée est multiplié par le signal de sortie d'un convertisseur tension/fréquence (37) puis le signal multiplié est filtré dans un filtre passe-bas (32) et le signal est converti en une tension proportionnelle à la fréquence, puis il est amplifié et appliqué à l'entrée du convertisseur tension/fréquence (37), procédé caractérisé en ce que la conversion du signal en une tension proportionnelle à la fréquence est assurée par un convertisseur (35) qui présente une caractéristique symétrique par rapport au zéro de la fréquence et la conversion de la tension de fréquence se fait par un convertisseur (37) qui présente une caractéristique symétrique par rapport au zéro de la tension.

2. Procédé selon la revendication 1, caractérisé en ce que le signal converti fréquence/tension est amplifié suffisamment fortement pour que la largeur de bande du signal à modulation de fréquence soit supérieure à la largeur de bande du signal d'entrée.

3. Dispositif pour réduire la largeur de bande d'un signal à largeur de bande limitée, le signal d'entrée et le signal de sortie d'un convertisseur tension/fréquence (37) étant fourni à un multiplicateur (31) et le signal de sortie du multiplicateur (31) est fourni à un filtre (32) suivi d'un convertisseur fréquence/tension (35) dont la sortie est suivie par un filtre en boucle (25) et un amplificateur (36), et le signal de sortie de l'amplificateur (36) est appliqué au convertisseur tension/fréquence (37), dispositif caractérisé en ce que le convertisseur fréquence/tension (35) présente une caractéristique symétrique par rapport au zéro de la fréquence et le convertisseur tension/fréquence 37 présente une caractéristique symétrique par rapport au zéro de la tension.

4. Dispositif selon la revendication 3, caractérisé en ce que le coefficient d'amplification de l'amplificateur (36) est choisi suffisamment grand pour que la largeur de bande du signal à la sortie du convertisseur tension/fréquence symétrique (37) soit supérieure à la largeur de bande du signal d'entrée.

5. Procédé de décodage d'un signal codé selon les revendications 1 à 4, caractérisé en ce qu'on crée un ensemble de n impulsions à petit rapport de temps et à densité spectrale régulière et pour créer les premiers signaux de détection qui correspondent à la formule :

$$\sin [ (4 \pi f_1) (t - K/2f_1)] / 4 \pi f_1 (t - K/2f_1)$$

on filtre par un filtre passe-bas de fréquence limite $2f_1$, on fait passer le signal d'entrée à largeur de bande limitée, codé, par un convertisseur fréquence/tension, symétrique, un amplificateur et un convertisseur tension/fréquence symétrique et on multiplie par les premiers signaux de détection, on filtre par un filtre passe-bas à fréquence limite $f_o$ l'ensemble des signaux résultant et on les enregistres dans un ensemble de n lignes de retard pendant des durées prédéterminées et on les fournit comme signaux de détection m(t,K) à un inverseur qui reçoit en outre les signaux de détection d'un signal d'entrée q(t), codé à largeur de bande limitée, enregistré dans une ligne de retard et on traite les signaux obtenus selon l'équation :

$$q(t) = \frac{\Sigma}{K} s (L/2f_1)m(t,K)$$

pour créer les signaux de détection $s(K/2f_1)$ du signal décodé s(t) en effectuant une inversion matricielle, n étant un nombre entier, $f_1$ la largeur de bande du signal d'entrée, t le temps et K le coefficient de compression de la largeur de bande.

6. Procédé selon la revendication 5, caractérisé en ce que les signaux de détection $s(K/2f_1)$ du signal décodé s(t) sont fournis à une mémoire tampon pour y être lus en série et être filtrés par un filtre passe-bas à fréquence limite $f_1$.

7. Procédé selon la revendication 5 ou 6, caractérisé en ce que les impulsions de l'ensemble de n impulsions présentent de préférence un rapport de travail de 1/1000.

8. Dispositif pour la mise en oeuvre du procédé selon l'une des revendications 5 à 7, caractérisé par une unité de synchronisation (40) avec une horloge (41) pour créer le jeu de n impulsions de petits rapports de travail, l'unité de synchronisation (40) étant reliée à un ensemble de n filtres passe-bas (42-44) de fréquence limite $2f_1$, et qui sont reliés à leur tour aux premières entrées d'un ensemble de n multiplicateurs (45-47), l'entrée du signal décodé étant reliée à un convertisseur fréquence/tension symétrique (48) relié par un amplificateur (49) à un convertisseur tension/fréquence, symétrique (50) dont la sortie est reliée aux secondes entrées des multiplexeurs (45-47), les sorties de ces multiplexeurs (45-47) étant appliquées respectivement à un filtre passe-bas (51-53) de fréquence limite $f_o$ et les n filtres passe-bas (51-53) sont reliés à un jeu de n lignes de retard (54-56) synchronisées par l'unité de synchronisation (40), l'entrée du signal codé étant reliée à une autre ligne de retard (57) synchronisée par l'unité synchronisation (40) et en ce que toutes les lignes de temporisation (54-57) sont reliées à un inverseur (58) synchronisé par l'unité de synchronisation (40) et effectuant une inversion matricielle.

9. Dispositif selon la revendication 8, caractérisé en ce que l'inverseur (58) se compose de multiplicateurs et d'additionneurs, de commutateurs, de comparateurs et de mémoires intermédiaires.

10. Dispositif selon la revendication 7 ou 8, caractérisé en ce que la sortie de l'inverseur (58) est reliée à une mémoire tampon (59) synchronisée par l'unité de synchronisation (40) et cette mémoire tampon (59) est reliée à un filtre passe-bas (60) à fréquence limite $f_1$.

11. Dispositif selon l'une des revendications 8 à 10, caractérisé en ce que n est supérieur à 25.

FIG. 1

FIG. 2

FIG. 3

FIG. 4

FIG.5

FIG.6

FIG.7

FIG. 8